# EUROPEAN PATENT APPLICATION

(11) **EP 1 107 637 A1**
(43) Date of publication of application: **13.06.2001**
(21) Application number: 99403060.9
(22) Date of filing: 07.12.1999
(51) Int. Cl.: H04Q 7/38

(54) **Cellular radio communications system with frequency hopping on the control channel**

(71) Applicant: MOTOROLA SEMICONDUCTEURS S.A., 31023 Toulouse Cédex (FR)
(72) Inventor: Abdesselem, Quelid, Toulouse 31000 (FR); Fouilland, Pascal, Tournefeuille 31170 (FR); Poulbere, Vincent, Toulouse 31000 (FR)
(74) Representative: Kopacz, William James

(57) **Abstract**

In a cellular radio communications system:
(i) at least one signal comprising control channel information is broadcast on a carrier to subscribers within the cellular radio communications system;
(ii) the said carrier is divided into TDMA frames, each TDMA frame having a frame number (N);
(iii) the system is adapted to store at least two sets (S0-S2) of pre-determined frequencies (fᵢ), the said carrier being broadcast at any particular time on a frequency taken from a selected one of the said sets (S0-S2) of pre-determined frequencies (fᵢ);
(iv) the system is adapted to chose the said selected one of the said sets of pre-determined frequencies (fᵢ) in dependence on the frame number (N) of the TDMA frame being broadcast at the said time.

The invention allows the radio system to employ both frequency hopping and multi-slot transmission, for example in an EDGE compact GSM system.

## Description

### Technical Field

The present invention relates to the field of radio communication systems. In general, this invention relates to a cellular radio communication system.

The invention is particularly, but not exclusively, applicable to cellular communication environments employing discontinuous transmission of control channel information. Such transmission is, for example, envisaged in EDGE Compact systems developed from the Global System for Mobile (GSM) communication architecture.

### Background

With increasing demand for cellular services, communication system designers are now modifying base technologies, such as GSM, to improve efficiency. Generally, the aims of these modifications are to enhance capacity, to increase spectral efficiency and to reduce administrative overhead. In the first respect, capacity may be increased through the ability to re-use different traffic- and control channel frequencies in smaller, tighter re-use patterns. Multi-layer techniques, for example, directly address the limited frequency spectrum available in the wireless domain, and may employ frequency re-use in ever increasingly tight frequency re-use patterns. In one particular cellular system, a plurality of adjacent serviceable cells are assigned traffic channel carriers according to a regimented or sequenced frequency re-use pattern.

Another approach to address the limited frequency spectrum available in the wireless domain is through the partitioning of traffic between an umbrella, or 'macro', cell that overlays a plurality of smaller cells. Each individual cell still has a dedicated control channel. However, all the control channels are broadcast on a single carrier. In other words, a single broadcast control channel (BCCH) carrier carries several cells' control channels, and overlays a multitude of pico-cellular type traffic channels. The pico-cellular base stations operate in a simulcast mode to transmit the BCCH control information. Effectively, therefore, a single wide-area BCCH services a plurality of cellular capsules. The BCCH is transmitted in the downlink from, effectively, a global base station. This form of system design is relatively easy to implement, especially in an indoor environment, and is not wasteful of frequency resources that would otherwise be required in the provision of individual BCCHs in individual cells according to a BCCH frequency re-use pattern. Effectively, one carrier is being shared amongst the cells in a time multiplexed fashion. In deployment, a pico-cellular configuration of cells could, for example, be arranged to service a particular floor or floors of a shopping complex or building, or a commercial group within an office suite.

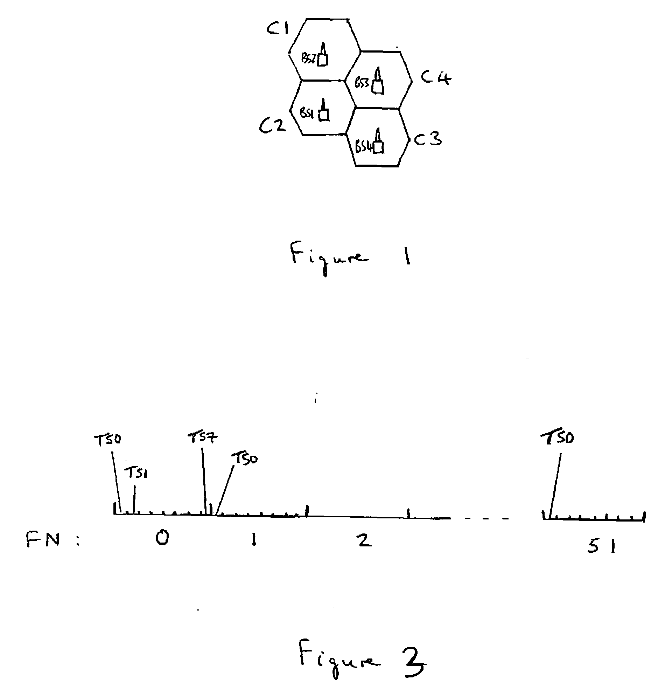

Appended Figure 1 shows an arrangement of four cells C1-C4. A single carrier may be used to broadcast the control channels for all four of these cells, with BCCH information for subscribers in all four cells contained in the single control channel. In the EDGE compact system, the base stations of all four cells would be synchronised to enable such transmission.

With a unitary but generally simulcast BCCH, the system as a whole is unable to benefit from subscriber stations, such as mobile radios, being able to continuously monitor downlink transmissions. This is because BCCH transmissions are effectively non-continuous across the cellular service area, and are curtailed as seen by a mobile radio in any particular location.

A 'subscriber station' in a GSM system may take a variety of forms. Essentially, the subscriber station can be defined as equipment having the ability to receive a GSM signal from a base station. Such equipment is usually referred to technically as a 'Mobile Station' or 'MS' in a GSM system. Typically this might be a mobile telephone. However, it might be a mobile radio which is also able to receive a GSM signal. A GPRS radio can also receive such signals. Clearly such a piece of equipment can normally also transmit to a base station, and may be able to transmit in 'direct mode' to other pieces of equipment. It is not essential that such a piece of equipment be mobile. In the following, the term subscriber station is used for all types of device such as these.

With an overlaid BCCH, generally realised by local simulcast broadcasts from several cells' base stations, and a plurality of pico-cells, non-continuous down link transmissions are advantageous. This is because the environment supports a higher, i.e. better, carrier to interference (C/I) ratio. In fact, downlink interference is only caused periodically by intermittent data traffic. With this improved C/I ratio, the system is generally better able to support any kind of transfer and especially data transfer, such as required in the Group Packet Radio System (GPRS). Moreover, in data services, it is preferable to have a good C/I since this reduces the requirement for overhead associated with forward error correction coding and hence results in a system that has a corresponding increase in data traffic throughput.

With respect to pico-cellular systems, these are employed in relatively small but densely populated serviceable areas, such as within buildings, between floors of buildings and in indoor environments generally. Pico-cells therefore have cell radii of between about ten and fifty metres and hence utilise a frequency re-use pattern for associated traffic channels that repeats over a significantly smaller distance than a corresponding re-use pattern for traffic channels in either a micro-cellular or macro-cellular scheme. In other words, successively smaller cells generally benefit from statistical frequency multiplexing to obtain tighter frequency re-use schemes.

The deployment of such multi-layer cellular techniques is likely to remain prevalent in resolving capacity issues for present and proposed cellular systems, including third generation systems such as UMTS (Universal Mobile Telecommunication System).

Turning to GSM, GSM is generally considered to be the de facto world-standard in time division multiplexed cellular systems. GSM has been enhanced by continuous improvements in performance offered by the introduction and use of, for example, half-rate codecs. Higher throughput will be obtained with the development of the EDGE Compact system, otherwise known as EGPRS Compact.

EDGE Compact utilises an 8-PSK (phase shift-keyed) modulation technique that therefore supports three bits per symbol and is hence significantly more efficient than conventional GSM. EDGE Compact can be operated in a stand-alone capacity. However, it is more generally, and at least presently, considered as an adjunct to a time division multiplexed (TDM) system having a circuit-switched backbone.

As regards the radio environment employed within an EDGE (EGPRS) Compact system, there is a sharing of channel carriers between ostensibly adjacent cells in a limited geographic environment. This applies to both any control channel resource and specific traffic carriers.

More especially, EDGE Compact is presently configured such that a cluster of nine or twelve cells share three frequency carriers, at least in relation to carriers for control channel purposes. Such an arrangement would result in an unacceptable interference environment if implemented using only conventional GSM.

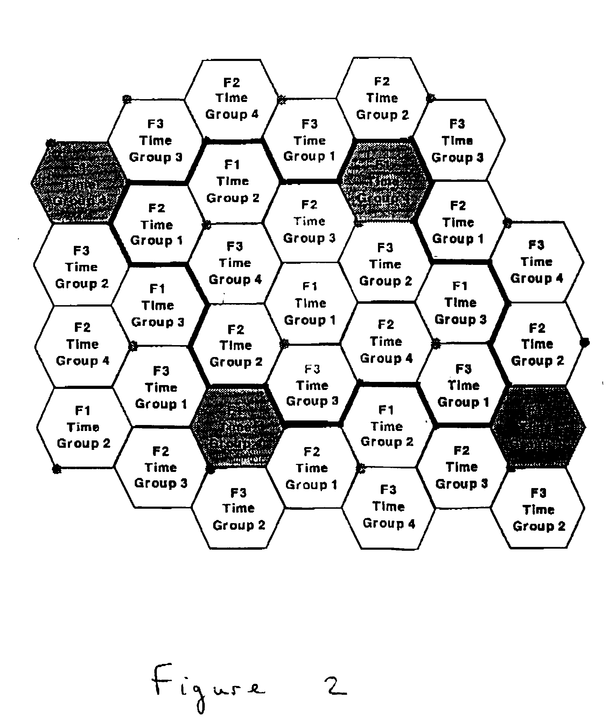

Figure 2 shows an arrangement of twelve cells of an EDGE compact cellular radio communications system. In EDGE, these cells are organised such that the signals broadcast by their base stations are synchronised.

The twelve cells of figure 2 may share three carriers. These carriers are spaced at 200kHz intervals, as are GSM carriers.

In EDGE Compact however, subscriber units are able to differentiate between cells by receiving time groups' of slots carrying control channel information. These time groups effectively provide a temporal offset for control channel transmissions between different cells which share a common control channel carrier resource. At any one time, only one cell actually transmits (i.e. broadcasts) control channel information on a carrier that is in fact shared with other cells. At other times, the other cells transmit control channel information on the same carrier. Looked at simply, each time slot on the carrier contains control channel information destined for mobile radios located in only one of the several cells which share the same common control channel.

On a practical basis, since the control channel is supported by a dedicated time-slot within a time division frame, a common control channel carrier in a four cell arrangement has equally partitioned and sequenced transmission periods, i.e. time-slots TS-1, TS-3, TS-5 and TS-7 are utilised within a four cell pattern of a cluster.

In the arrangement of Figure 2, a set of twelve cells is outlined with a bold, dark black border. Four of the cells within the border contain the designation 'F1'. This means that the control channel information for subscriber stations in all of these cells is broadcast on a single carrier, referred to here as F1.

Considering the four cells which contain the designation 'F1', two things are clear. Firstly, none of these cells borders any of the other four. Secondly, each of these cells is marked with a different 'Time Group' designation. These differing time group designations indicate that each of the four cells broadcasts control channel information to subscriber stations within the cell on a distinct set of time slots on the carrier. Thus subscriber stations in each cell are addressable by means of a time portion of the carrier particular only to their cell.

A similar scheme can be recognised by examining the four cells designated 'F2', and the further four cells designated 'F3' in figure 2.

Control channel transmissions on the 'downlink' from the base station to mobiles are always at full power. In contrast with control channel transmissions however, traffic channel downlink transmissions are subject to power control.

This limits interference by ensuring that co-channel interference that would otherwise corrupt data in the downlink is minimised. In essence, in the traffic domain, a combination of downlink power control allied with the use of specific training sequences, modulation techniques and error correction algorithms address potential interference problems and ensures that EDGE Compact benefits from an increased frequency re-use scheme.

Turning to the mechanism by which EDGE Compact subscriber units select a servicing base station transceiver, in accordance with the EDGE Compact scheme the subscriber unit presently undertakes a defined regime. The subscriber unit, which may be a mobile unit, begins by assessing a power/energy profile of its local area frequency spectrum. This requires the subscriber unit to undertake numerous power measurements at different frequencies. In fact, since a subscriber unit in EDGE Compact initially has no synchronisation to a possible serving base station, the subscriber unit is unable to guarantee direct access to a 'signalling (control channel) block' supported on a downlink carrier. This is in stark contrast with GSM.

Once the power measurements have been completed, the subscriber unit rank-orders the power measurements. Then, the subscriber unit must seek to acquire frequency alignment with a control channel carrier for each possible carrier to identify a servicing cell suitable for use. Finally, with a selected cell, having a selected control channel carrier frequency, the subscriber unit must acquire synchronisation at a bit level to ensure accurate internal timer operation.

In GSM, the continuous transmission of the control channel multiframe and the various timely occurrences of control bursts thereof ensures that a subscriber unit can locate the frequency correction channel (FCCH) and hence select a cell relatively easily and quickly. Importantly, however, in EDGE Compact, discontinuous control channel transmissions present a considerable problem regarding the analysis of power distribution within potentially useable frequency spectrum.

At this point, it is appropriate to re-consider the general structure of a control channel, and to clarify the concept of a time-slot. As should be appreciated, the control channel in a TDM-based system is generally associated with a dedicated time-slot that is arranged to carry different control instructions in successive transmissions thereof.

A GSM frame constructed from eight time-slots has duration of 4.615 milliseconds (ms), each time-slot having an approximate length of 0.577ms. Successive 0.577ms downlink time-slots are separated by a whole frame. These time-slots support bursts of data. Each control channel multiframe is defined by a set number of frames.

Each EDGE Compact multiframe consists of 52 frames. This contrasts to the fifty-one frames used in a conventional GSM multiframe.

Appended Figure 3 is a generalised illustration of such an EDGE compact multiframe. The frames are 'FN' numbers 0-51. Each frame contains eight time slots, which are numbered TS0, TS1 ...TS7.

Of the fifty-two frames in the EDGE Compact multiframe, forty-eight of the frames are assigned in contiguous blocks of four to provide twelve control signalling blocks. These signalling blocks are labelled BO to B11. Of these twelve control blocks, two are fixed within the multiframe format. Others are dynamically assignable, whether they are of the same type as those that are fixed or whether they are of a different type/nature.

In considerably more detail, the EDGE Compact multiframe is equally partitioned by the compact frequency correction channel (CFCCH) at the frame-25 location, and the compact synchronisation channel (CSCH) at the frame-51 location. The multiframe is also structured to always include a compact packet broadcast control channel (CPBCCH) that is always accommodated in block zero, block zero being frame-0 to frame-3. There is also a compact packet paging channel (CPPCH) in block eleven. Information contained in the CPBCCH is actually associated with many aspects of a cellular call, including channel allocation and handover.

Two of the remaining ten blocks are also allotted to support either CPBCCH or CPPCH downlink transmissions. However, the exact block allocation is dynamically variable within the multiframe, as is whether both are CPBCCH, both are CPPCH or there is a split therebetween.

The remaining control signalling (CC) blocks in EDGE Compact are allocated on a dynamic basis to support whatever control function is required within a cell at a particular time. The remaining control signalling blocks may take the form of paging channels, access grant channels, broadcast control channels, etc., with these functional channel designations being merely examples of typical internal control channels supported within the CC multiframe. In other words, control signalling blocks are allocated in a pseudo-random scheme from a subscriber unit perspective. The remaining two frames are assigned for packet timing correction (PTCCH).

The multiframe structure is described in GSM Technical Standard (TS) 05.02 version 8.1.0 and see also CRA180rl of GSM TS 05.08 section 12.

In EDGE Compact, in view of the discontinuous nature of downlink transmissions and the fact that the CFCCH is transmitted only once per multiframe period, a subscriber unit is potentially subject to extremely long delay to the end user. In fact, an EDGE Compact subscriber unit can presently be assured of have access to a burst of a signalling control channel block only once every nineteen frames, for a single carrier frequency and for a single cell. When a subscriber unit has to measure the power level of a cell, the subscriber unit must pick up radio frequency (RF) levels only on the bursts that have been emitted by the cell at full power. It should now be appreciated that, at a minimum, such bursts occur on the CFCCH, CSCH and on four blocks allocated to the CPBCCH and CPPCH logical channels.

Two parameters determine the position of the CPBCCH and CPPCH in the EDGE Compact multiframe, namely BS_PBCCH_BLKS and BS_PAG_BLKS_RES. These logical control channels follow an ordered sequence: B0, B6, B3, B9, B1, B7, B4, B10, B, B8, B5, B11. The blocks supporting CPBCCH are the first blocks of the ordered list, in number equal to BS_PBCCH_BLKS. To determine the blocks supporting CPPCH, remove from the ordered list the BS_PBCCH_BLKS + BS_PAG_BLKS_RES blocks; the remaining blocks are CPPCH blocks. For example:

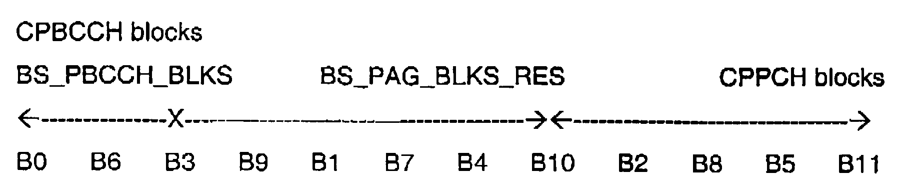

As indicated, the total number of CPBCCH and CPPCH blocks is at least equal to four. Furthermore, since there is at least one block of CPBCCH and one block of CPPCH, there are at least three configurations for full power block within a logical control channel limited EDGE Compact multiframe. If we consider a power scan of such channels without prior synchronisation nor knowledge of the broadcast parameters BS_PBCCH_BLKS and
BS_PAG_BLKS_RES, then a basic algorithm consists in opening a reception window long enough to contain at least one full power burst. This window has to be designed for the worst scenario and so provides a minimum duration of 150 time-slots for the window.

Block allocation in EDGE Compact is described in the document on ETSI TS 05.02 version 8.1.0.

Returning to the GSM standard, 'frequency hopping' is used in GSM. Frequency hopping involves changing the frequency on which each time slot is transmitted. The available frequencies for hopping are known to both the GSM control system and subscribers within the system. The effect of frequency hopping is to reduce the number of transmission errors, thereby enabling a better radio link on average.

The compact EDGE cellular radio system was not originally envisaged as using frequency hopping. Recently, the ETSI standards authority has received a submission which proposes a compact EDGE system which does employ frequency hopping. However, the system proposed reduces another desirable characteristic of the original design for compact EDGE, which is the ability to perform 'multi-slot' operation.

Multi-slot operation involves extending the broadcast of a signal destined for any particular mobile onto two or more time slots of the same frequency within a TDMA frame. However, combining multi-slot operation and frequency hopping in compact EDGE has until now appeared difficult.

A need exists to alleviate the problems of the prior art. In particular, the applicant has realised that frequency hopping can be implemented efficiently together with multi-slot operation in a cellular radio communication system.

### Summary of the Invention

A cellular radio communications system in accordance with the present invention shows the features of appended independent claim 1. A subscriber station in accordance with the present invention shows the features of appended independent claim 15. A method of transmitting signals in a cellular radio communications system shows the steps of appended independent claim 28.

### Brief description of the drawings

**Figure 1** shows an arrangement of four cells of a Compact EDGE cellular radio communications system.

**Figure 2** shows an arrangement of twelve cells of an EDGE compact cellular radio communications system

**Figure 3** is a generalised illustration of an EDGE compact multiframe.

**Figure 4** illustrates a carrier broadcast in accordance with a first embodiment of the invention.

**Figure 5** illustrates a further carrier which may be broadcast by the first embodiment of the invention.

**Figure 6** illustrates a carrier broadcast in accordance with a second embodiment of the invention.

**Figure 7** illustrates a further carrier which may be broadcast by the second embodiment of the invention.

**Figure 8** illustrates examples of entire multiframe carrier structures in accordance with the first embodiment of the invention.

**Figure 9** illustrates examples of entire multiframe carrier structures in accordance with the third embodiment of the invention.

**Figure 10** illustrates an arrangement of three subscriber stations in a cell of a cellular radio communications system.

**Figure 11** illustrates in detail the internal elements of a mobile radio subscriber.

### Detailed description of preferred embodiments

### First Embodiment

A cellular radio communications system in accordance with the invention shows the following features:
1) At least one signal comprising control channel information is broadcast on a carrier to subscribers within the cellular radio communications system. The radio communications system may be divided into cells, to which signals are broadcast as generally shown in Figure 2.
2) The carrier is divided into TDMA frames, each TDMA frame having a frame number N. The carrier may be divided up in time as shown in figure 3.
3) The system is adapted to store at least two sets S0- S2 of pre-determined frequencies fᵢ, the carrier being broadcast at any particular time on a frequency taken from a selected one St of the sets SO- S2. Each base station which broadcasts any given carrier therefore broadcasts the carrier on a frequency fᵢ selected from a particular one St of the sets S0-S2 at any given instant in time.
4) The system is adapted to chose the selected one St of the sets of pre-determined frequencies fᵢ in dependence on the frame number N of the TDMA frame being broadcast at the time. The system may therefore change the set St, from which a broadcast frequency is taken, for different frame numbers N of the carrier.

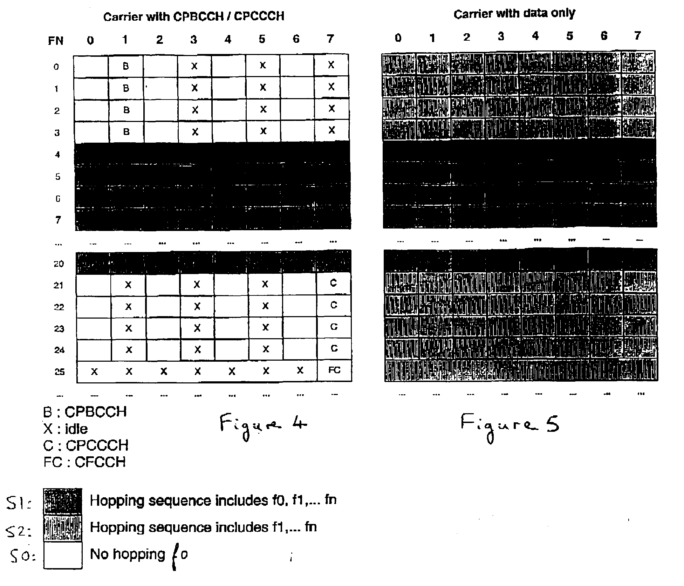

Figure 4 illustrates a carrier broadcast in accordance with a first embodiment of the invention. The carrier of figure 4 is a 'primary' carrier. This carrier is one which carries control channel information for subscriber stations, at least part of which control channel information may be used by a subscriber station to establish synchronism with the radio system.

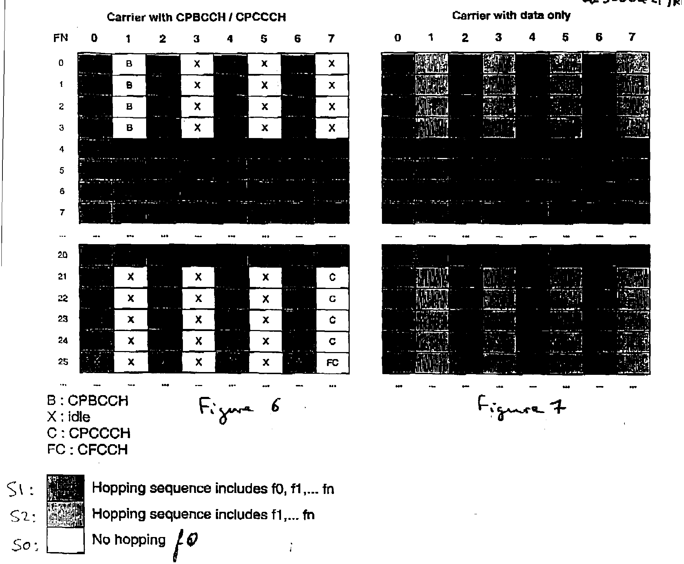

The first four frames of the carrier are frame numbers FN 0-3. Each of these four frames is illustrated in white, indicating that they are broadcast with a frequency taken from set SO. See the illustration of three squares below the figure 4 designation, towards the lower left of the page. This illustration of three squares also applies to figure 5 on the same sheet of figures. Frames 0-3 contain control channel data, see the slots labelled 1 in each of frames 0-3.

Frames 4-20 in figure 4 are illustrated in black. The frames in black are broadcast with a frequency taken from set S1. Frames 4-20 in figure 4 contain payload data for subscriber stations, and do not have time slots which contain control channel data.

The carrier of figure 4 has clearly provided an arrangement whereby the frames comprising control channel data are broadcast on a frequency taken from one set of frequencies, S0, and the frames which do not comprise control channel data are broadcast on a frequency taken from a different set of frequencies, S1.

Figure 5 shows a 'secondary' carrier which may also be broadcast by the first embodiment of the invention, in addition to the carrier of figure 4. The carrier of figure 5 contains payload data for subscriber stations. The carrier of figure 5 may be arranged to have time slots which contain control channel data, however, if present, these slots are not used by the subscriber stations to establish initial synchronisation with the radio system. The payload data comprises voice or data for subscriber stations. This data leads the signals broadcast on secondary carriers to be referred to as traffic channels. The slots of data are referred to as traffic channel slots.

Frame numbers 0-3 in figure 5 are broadcast on a frequency taken from set S2, and frame numbers 4-20 are broadcast on a frequency taken from set S1.

In the particular arrangement shown in figures 4 and 5, certain preferred enhancements to the basic invention have been employed. The set SO contains only one frequency, f0. Set S1 contains a number of frequencies, including fo. Set S2 however contains a number of frequencies, but does not include f0. Also, the system may use the pre-determined frequencies from a selected set St of the sets SO-S2 of pre-determined frequencies to broadcast the carrier in a frequency hopping sequence.

The progression of time in each of figures 4 and 5 is shown left to right through each frame, and down the page for rising frame numbers. Figures 4 and 5 share a common time scale, whereby corresponding slots and frames on the two figures are transmitted simultaneously by the system.

Considering figure 4, frames 0-3 are broadcast on the single frequency f0 of set SO. GSM frequency hopping is therefore not applied by the system to frames 0-3 of the primary carrier. However, frames 4-20 of the primary carrier may be broadcast on any of the frequencies contained in set S1. The system may therefore apply frequency hopping to frames 4-20.

Turning to figure 5, frames 0-3 may be broadcast on any of the frequencies contained in set S2. Set S2 does not contain frequency f₀, so therefore frames 0-3 of the secondary carrier may not be broadcast on the frequency used by frames 0-3 of the primary carrier. The system may apply frequency hopping to frames 0-3 of the secondary carrier. Frames 4-20 in figure 5 may be broadcast on any of the frequencies contained in set S1. Therefore the system may apply frequency hopping to frames 4-20 of the secondary carrier within the same wide range of frequencies, including f₀, as for frames 4-20 of the primary carrier.

Clearly, since the first set S0 of the sets of frequencies consists of only one pre-determined frequency f₀, the cellular radio communications system does not apply frequency hopping to the carrier when the first set S0 has been selected. Also, in figure 4, the system selects the first set of frequencies S0 when a frame containing control channel data is being broadcast. Using the different sets S0-S2 of pre-determined frequencies, the cellular radio communications system has been optimised for multi-slot operation. Considering frames 0-3 of the primary carrier in figure 4, for example, the carrier is not subject to frequency hopping, so all the time slots of the frames 0-3 are broadcast on the same frequency. Subscriber stations are able to receive all the time slots of frames 0-3 without re-tuning between timeslots within a frame, and therefore are not hindered by the finite time which they require to re-tune between receiving frequencies. This re-tune time is significant in comparison to the much smaller time within which a base station of the system can re-tune its broadcast frequency. With the arrangement of the invention therefore, any particular subscriber station is better able to make power measurements or to receive control channel information, for example to achieve synchronism with the radio communications system.

The cellular radio communications system of the invention may be an EDGE compact or EDGE GSM cellular radio communications system. In such an EDGE compact system, the base stations of at least two cells C1, C2 of the cellular radio communications system are synchronised together for broadcasting the primary carrier. The signal broadcast on the primary carrier comprises the control channel information for subscribers in the cells. If the secondary carrier is broadcast to the cells, it will carry data for the subscriber stations in the cells, and may carry control channel information which is not used by mobiles for synchronisation.

Figures 4 and 5 have been explained exclusively in terms of the cellular radio communications system broadcasting to subscriber stations. However, the system also receives signals from subscriber stations.

Typically, a subscriber station achieves synchronisation with a sufficiently strong primary carrier, by receiving the control channel data on the primary carrier. The subscriber station may then receive payload data from the primary carrier, from the traffic channel slots such as those shown in as frames 4-20 of figure 4. This payload data may be voice and/or data. The subscriber station may also then transmit payload data to the radio communications system on these traffic channel slots. The subscriber station must use the frequencies for each frame chosen by the system, in order to be able to send and receive the payload data.

However, the radio communications system may assign the subscriber station to a secondary carrier, such as that shown in figure 5. In this case, the subscriber station will send and receive payload data in any frames such as 0-20 in figure 5, and will use the frequencies selected by the radio communications system to do this.

Looking in more detail at the difference between the primary carrier and the secondary carrier in a system such as EDGE compact, the following points are notable. Firstly, the information on the primary carrier referred to as 'control channel' data comprises a variety of different types of information.

The Primary Compact carrier is a radio frequency channel which is used to carry synchronization information for Compact, i.e. CSCH and CFCCH information, and CPBCCH information. At initial synchronization of a mobile station to the radio system, a mobile station first detects a CFCCH, then decodes a CSCH and then obtains the CPBCCH. The channel combination on a primary carrier is:
CFCCH+CSCH+CPBCCH+PDTCH+PACCH+PTCCH
(1) CFCCH- Compact Frequency Correction CHannel
   Same role as for FCCH in GSM (frequency synchronization)
(2) CSCH- Compact Synchronization CHannel
   Same role as SCH in GSM (carries timing information, enables to perform the frame synchronization).
(3) CPBCCH- Compact Packet Broadcast Control CHannel
   The CPBCCH is a stand-alone packet control channel for Compact. The CPBCCH broadcasts parameters used by the MS to access the network for packet transmission operation. CPBCCH carries the same set of Packet System Information (PSI) messages as PBCCH (in GPRS). However, the PSI in EDGE Compact have additional information used specifically for Compact, for example Compact channel configuration.
(4) PDTCH- (like in GPRS) Packet Data Traffic CHannel
(5) PACCH- (like in GPRS) Packet Associated Control CHannel
(6) PTCCH- (like in GPRS) Packet Timing Advance Control CHannel
(7) CPCCCH- Compact Packet Common Control CHannel
   As in GPRS, there are several types of CPCCCH:
   i) Compact Packet Paging channel (CPPCH): Downlink only, used to page a mobile station or'MS'.
   ii) Compact Packet Random access channel (CPRACH): Uplink only, used to request allocation of one or several Packet Data Traffic Channels (PDTCH), for the uplink or downlink direction.
   iii) Compact Packet Access grant channel (CPAGCH): Downlink only, used to allocate one or several PDTCH.
   iv) Compact Packet Notification channel (CPNCH): Downlink only, used to notify MS of PTM-M call.

The Secondary Compact carrier is any other radio frequency channel of the cell allocation in Compact. The main difference between the primary and secondary carriers is that a mobile station will use only a primary Compact carrier for initial synchronization. A secondary carrier may also comprise control information, but this information is not used for synchronisation by the subscriber stations.

In the first embodiment of the invention, a rule can be applied to the multiframe to avoid having consecutive timeslots with different hopping sequences. This rule can be:
- On blocks B0, B3, B5, B6, B8, B9, B11 and FN 25 and 51:
   a) no hopping is applied on the primary Compact carrier
   b) hopping with other frequencies is used on secondary Compact carrier
- On other blocks and FN : hopping is applied using all the frequencies of the cell allocation.
This rule has been applied in the multiframes shown in figures 4 and 5.

Where frequency hopping is applied in the first embodiment, the frequency hopping algorithm described in GSM TS 05.02 is used with the following modification:
- On the primary carrier, hopping is activated or deactivated depending on the frame number FN.
- On secondary carriers, the 'Mobile Allocation' and 'Mobile allocation index offset' used for the hopping sequence generation depends on the frame number FN.

The 'Mobile Allocation' or 'MA' is the allocation of radio frequency channels to the particular subscriber station. The MA defines the set of radio frequency channels to be used in the subscriber's frequency hopping sequence. The MA contains a number between 1 and 64 radio channels in a full GSM system. The concept of an MA is known in the prior art. However, the present invention envisages setting MA=1 for certain TDMA frames, in order to forbid frequency hopping for those frames.

The 'Mobile allocation index offset', or 'MAIO', is a variable which can take values from 0-63. One further variable involved in determining precisely which frequency is used in a frequency hopping sequence is the Hopping sequence generator number, or 'HSN'. The HSN is a familiar concept from GSM.

The advantage of the solution of the first embodiment of the invention is :
- No constraint on multislot operation for subscriber stations (mobiles), and
- in the large cell case no change has to be made to this scheme, contrary to presently available proposals.
A drawback of the solution of the first embodiment of the invention is:
- Fewer data blocks are protected by frequency hopping on the primary carrier than in a second embodiment of the invention, details of which follow.

### Second Embodiment

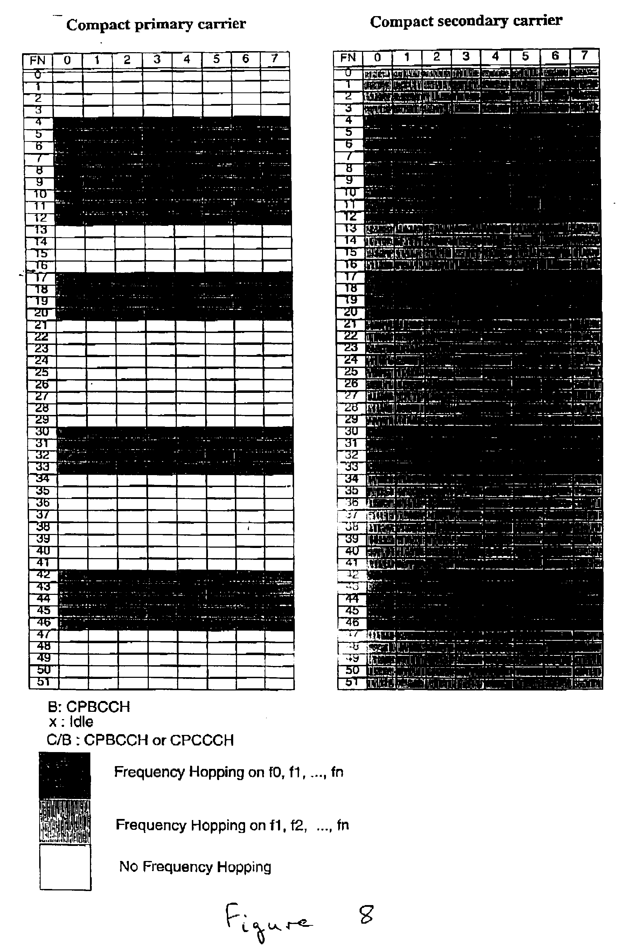

Figure 6 illustrates a carrier broadcast in accordance with a second embodiment of the invention. Figure 7 illustrates a further carrier which may be broadcast by the second embodiment of the invention.

The carrier of figure 6 is a primary carrier, and its function within the cellular radio system is analogous to that of figure 4. The carrier of figure 7 is a secondary carrier, and its function within the cellular radio system is analogous to that of figure 5. Only the differences between figures 6 and 4, and 7 and 5 respectively will be explained in detail here.

Considering the primary carrier of figure 6, the radio system selects set S1 of pre-determined radio frequencies for broadcasting the even numbered slots in frames 0-3. These are time slots 0, 2, 4 and 6. Frequency hopping may therefore be applied to these slots. The cellular radio communications system has chosen the selected one of the sets in dependence on both the frame number N of the TDMA frame and the number of the time slot TS being broadcast at a particular time.

In figure 7, the even numbered time slots 0,2,4 and 6 of frames 0-3 are broadcast on frequencies selected from set S1. Frequency hopping amongst all the frequencies of set S1 may be applied to these slots. Only the odd numbered slots 1,3,5 and 7 of frames 0-3 of the secondary carrier are broadcast using frequencies taken from set S2. These odd numbered slots may therefore be broadcast with frequency hopping amongst the frequencies of set S2, which is restricted in comparison with the set S1 in that it lacks the frequency f0 which is the sole member of set S0.

The second embodiment of the invention shown in figures 6 and 7 takes into account the following constraints:
(1) Constraints linked to initial synchronization and neighbor information :
   - No hopping on CPBCCH blocks (B0, and possibly B3, B6, B9)
   - No hopping on CFCCH (FN 25)
   - No hopping on CSCH (FN 51)
(2) Constraints linked to power measurement algorithm:
   - No hopping on the 4 initial blocks that are used for power measurement. There are 3 possible minimal configurations depending on the amount of CPBCCH blocks : {B0, B5, B8, B11} ; {B0, B5, B6, B11}; {B0, B3, B6, B11}
      Consequently, on TS 1, 3, 5, 7 of a primary COMPACT carrier, frequency hopping shall not be applied on :
   - Blocks B0, B3, B5, B6, B8, B9, B11,
   - Frame numbers 25 and 51.

The second embodiment does however permit frequency hopping on odd timeslots of the CPBCCH/CPCCH carrier, except for the radio blocks defined above. The frequency hopping algorithm described in GSM TS 05.02 is used with the following modification:
(1) On even timeslots: no modification.
(2) On odd timeslots :
   - On the primary carrier, hopping is activated or deactivated depending on the frame number FN.
   - On secondary carriers, the Mobile Allocation (MA) and Mobile Allocation Index Offset (MAIO) used for the hopping sequence generation depends on the frame number FN.

The advantages of this second embodiment are:
- Most of data blocks sent on the CPBCCH carrier are protected by frequency hopping;
- Multislot allocation is possible as soon as the BSS takes into account FN before allocating blocks.
   The drawbacks of this second embodiment are:
- The frequency hopping law still depends on TS number for some radio blocks,
- Additional complexity for data block allocation because FN needs to be taken into account.

Considering all of figures 4-7, the following general points need to be considered:
(i) Only frames 0-20 of each of the carriers of each of figures 4-8 have been discussed in detail. However, the frames from 21-25 are marked in the same scheme of white, grey and black, showing the set of frequencies which the radio system applies to broadcasting these frames and their slots.
(ii) Set S1 may, in its simplest form, only contain frequency f0 and one other frequency. Set S2 may contain only one frequency, different from that in set S0. Clearly more frequencies may be present in each of sets S1 and S2. In order to inhibit frequency hopping when set S0 is selected however, S0 can only contain a single frequency.
(iii) In an arrangement such as that in figure 3, the three frequencies F1-F3 used in the pattern of twelve contiguous cells are all used as control carriers, i.e. primary carriers, for one set of four cells. Each of the three is used as the control carrier for four cells, but may be re-used in another cell. In applying the present invention to the arrangement of figure 3 therefore, set S2 would not be used. For one of the four cells marked in figure 3 as 'F1':
   S0: F1
   S1: F1;F2;F3

### Third embodiment

The third embodiment of the invention provides a development of the radio system and carrier used in the first embodiment.

The third embodiment in fact provides a re-distribution of the control blocks within the carrier. The new control block allocation rule is:
- CPBCCH and CPPCH block allocation follows the rule B0, B6, B3, B9, ...; and
- In this allocation series, allocate first all the CPBCCH blocks and then all the paging blocks, in sequence.

An example of allocation under this rule is as follows, for 1 CPBCCH and 2 CPPCH blocks:

The new rule would give blocks B0 & B11 for the CPBCCH data, and blocks B5 & B8 for the CPPCH data. With this modification, CPBCCH blocks and possibly PCCCH blocks would always be allocated to the same blocks. This provides maximum transmit power, with no hopping, which is mandatory for the subscriber station to perform power measurement. These blocks would be B0, B3, B6, B9. Hopping would be allowed on all other blocks, carrying data and possibly PCCCH.

In the same example, the block allocation rule used in the first embodiment, which produced the carriers of figures 4 and 5, would have given blocks B0 & B6 for the CPBCCH data, and blocks B5 & B11 for the CPPCH data.

The advantage of the new allocation rule is that only 4 blocks would be prevented from employing frequency hopping. The rule used in the first embodiment of the invention would have lead to 7 of the twelve blocks being prevented from frequency hopping. The seven blocks which cannot hop in the first embodiment are B0, B3, B5, B6,B8, B9 and B11 of the primary Compact carrier. This problem arises because we must guaranty that at least 4 control blocks do not hop for a subscriber station to be able to perform power measurement 'blind', without knowing which blocks to scan, and with the position of these blocks changing according to the channel mapping in the cell.

Another advantage of the block allocation rule of the third embodiment is that it would decrease significantly the measurement process for a subscriber station to select a COMPACT cell. This is because places within the multiframe where a subscriber station could perform the power measurements would be distributed at fixed and regular locations on the 52-multiframe.

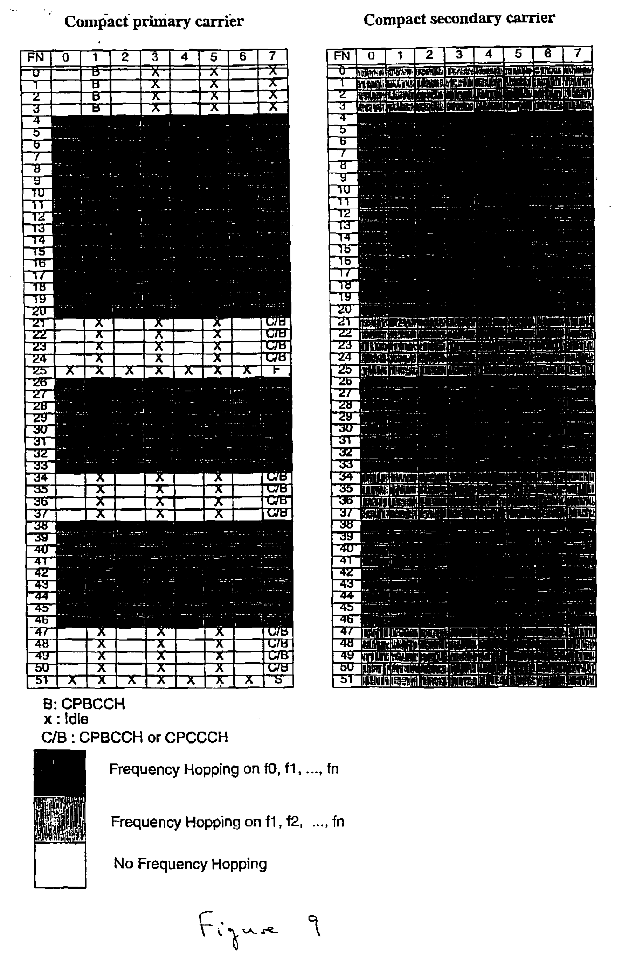

Figure 8 illustrates examples of entire multiframe structures of primary and secondary compact carriers in accordance with the first embodiment of the invention. Figure 9 illustrates examples of entire multiframe structures of primary and secondary compact carriers in accordance with the third embodiment of the invention,

The carriers of figure 9 differ from those of figure 8 in the new block allocation within the multiframe. This can be seen by comparing the frame numbers of frames which contain control channel information in the primary carriers on the left half of each of figures 8 and 9.

### Effects of the Invention

The first embodiment of the invention favours multislot handling compared to the prior art EDGE Compact proposal. The first embodiment also eliminates the minor constraint on multislot operation of the second embodiment. Consequently the first embodiment is preferred to the second embodiment.

The third invention proposes association of the improvement of the first embodiment of the invention with a new control block mapping. Nevertheless, this option is not compulsory for the handling of multislot mobiles but could significantly enhance the channel quality.

The improved performance of the radio communication system of the third embodiment can be seen in the following:
1) With the allocation rule of the first embodiment
   28 out of 52 TDMA frames of the primary Compact carrier do not hop. So 54% of the TDMA frames do not hop and 46% hop on set S1 = {f0, f1, ..., fn}. On a secondary carrier, 54% of the TDMA frames would hop on set S2 = {f1, f2, ..fn} and 46% of the TDMA frames would hop on set S1 = {f0, f1, ..., fn} (with 1 more frequency).
2) With the allocation rule of the third embodiment:
   18 out of 52 TDMA frames of the primary Compact carrier do not hop. On a secondary carrier, 35% of the TDMA frames would hop on set S2 = {f1, f2, ..fn} and 65% of the TDMA frames would hop on set S1={f0, f1, ..., fn} (with 1 more frequency).

The following table compares the amount of hopping achievable by the first and third embodiments of the invention explained above. The table is constructed for a primary COMPACT carrier with 1 CPBCCH and 3 CPCCCH. The total number of blocks that can used for user traffic in a 52-multiframe is : (4 blocks * 4 TS + 8 blocks * 8 TS) = 80.

The percentages are the percent of data blocks which can employ frequency hopping, which is a measure of the efficiency of the hopping scheme of each of the first and third embodiments.

| Compact Carrier: | Primary | | Secondary | |
|---|---|---|---|---|
| | No hopping | Hopping (f0,f1,...., fn) | Hopping {f1,....,fn} | Hopping {f0,f1,....,fn} |
| First embodiment: | 50% | 50% | 50% | 50% |
| Third embodiment: | 20% | 80% | 20% | 80% |

The table shows also that the new block mapping of the third embodiment increases significantly the amount of blocks to which frequency hopping is applied. The first embodiment in fact has a slightly reduced amount of hopping than one with a multislot constraint, such as that of the second embodiment.

The invention therefore provides a radio communications system with frequency hopping applied to the carrier, and which also facilitates multi-slot operation. Thus the radio communication system can employ GSM slow frequency hopping to provide reduced channel error rates for transmissions, and also multi-slot operation for increased information through-put for transmission to and reception from subscriber stations. Additionally, the third embodiment also provides channel acquisition in a reduced time by improved sequencing of those blocks of control information which subscribers can use to obtain synchronisation.

The issue of multislot mode in frequency hopping is a key issue for the success of EGPRS Compact. Without the present invention, high bit rates in multislot mode would require deactivation of frequency hopping. This de-activation would result in lowered throughput because of bad channel quality.

### Subscriber station in accordance with the invention

The invention also extends to a subscriber station.

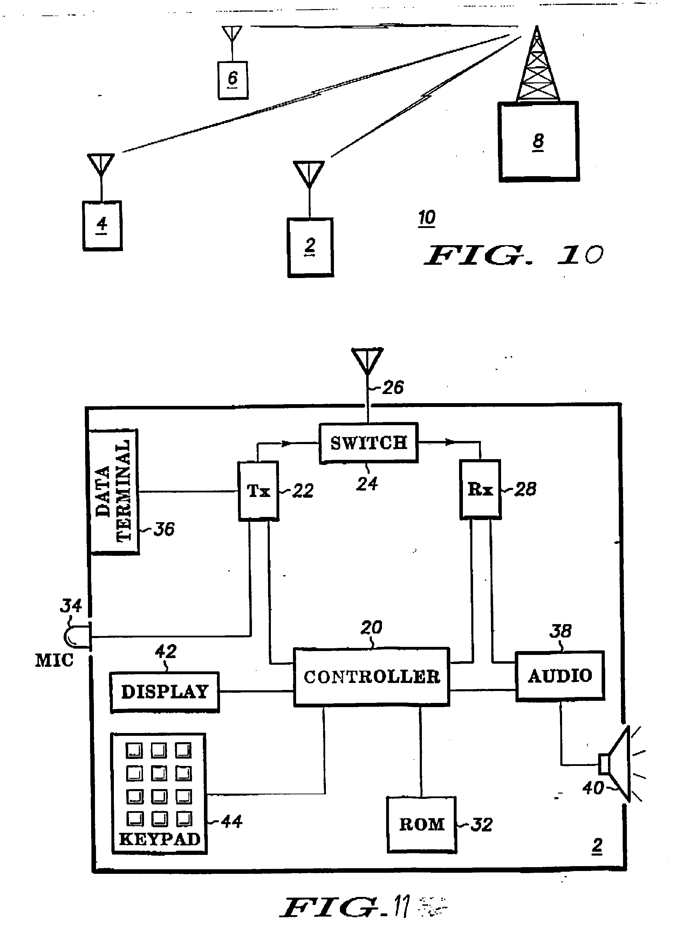

Figure 10 illustrates three subscriber stations 2, 4 and 6 located in a single cell. Subscriber stations 2, 4 and 6 are mobile radios in this example. The cell has a base station, labelled 8 in figure 10.

Figure 11 illustrates in detail the internal elements of a mobile radio subscriber such as radio 2 of figure 10.

Figure 11 illustrates a radio in accordance with the present invention. The radio of figure 11 may be either a portable- or a mobile radio.

The radio 2 of figure 11 can transmit speech from a user of the radio. The radio comprises a microphone 34 which provides a signal for transmission by the radio. The signal from the microphone is transmitted by transmission circuit 22. Transmission circuit 22 transmits via switch 24 and antenna 26.

Radio 2 also has a controller 20 and a read only memory (ROM) 32. Controller 20 may be a microprocessor. ROM 32 is a permanent memory, and may be a non-volatile Electrically Erasable Programmable Read Only Memory (EEPROM).

The radio 2 of figure 11 also comprises a display 42 and keypad 44, which serve as part of the user interface circuitry of the radio. At least the keypad 44 portion of the user interface circuitry is activatable by the user. Voice activation of the radio, or other means of interaction with a user, may also be employed.

Signals received by the radio are routed by the switch to receiving circuitry 28. From there, the received signals are routed to controller 20 and audio processing circuitry 38. A loudspeaker 40 is connected to audio circuit 38. Loudspeaker 40 forms a further part of the user interface.

A data terminal 36 may be provided. Terminal 36 would provide a signal comprising data for transmission by transmitter circuit 22, switch 24 and antenna 26.

A subscriber station 2 in accordance with the invention comprises the following elements:
(i) radio receiver means 24, 28 for receiving a signal broadcast on at least one carrier, the said signal comprising control channel information for subscribers within the cellular radio communications system, the said carrier being divided into TDMA frames, each TDMA frame having a frame number N;
(ii) means 32 storing at least two sets S0- S2 of pre-determined frequencies fᵢ; whereby,
(iii) the subscriber station 2 is adapted to receive the carrier at any particular time on a frequency taken from a selected one of the said sets S0- S2 of pre-determined frequencies fᵢ; and
(iv) the subscriber station 2 is adapted to chose the selected one of the said sets in dependence on the frame number N of the TDMA frame being received at the said time.

Clearly such a subscriber station can receive the signals described in figures 3-9 above. Assume now, for the purposes of illustration, that the subscriber station is a portable Mobile Station (MS). The subscriber station may be an EDGE compact- or EDGE classic GSM mobile radio.

The MS may be further adapted to chose the selected one of the sets S0-S2 in dependence on both the frame number N of the TDMA frame and the number of the time slot TS within the TDMA frame being received at the said time, The MS may use the pre-determined frequencies from the selected set to receive slots of the carrier in a frequency hopping sequence.

However, the MS may store a first set S0 of frequencies consisting of only one pre-determined frequency f₀, whereby the MS does not apply frequency hopping in receiving slots of the carrier when the first set has been selected. The at least one signal on the carrier may comprise control channel information for the MS, and the MS may select the first set of frequencies S0 when a frame containing control channel data that is used for initial synchronisation is being broadcast.

In detail, a first set of frequencies S0 may comprise only a first frequency, and a second set of frequencies S1 may comprise at least two frequencies, one of the frequencies of the second set being the first frequency f₀. The MS may in addition store a third set of frequencies S2, comprising one or more frequencies, the one or more frequencies of the third set not including the first frequency f₀.

The MS may receive a carrier comprising: slots of control channel data, at least some of the control channel data providing synchronisation information, and traffic channel slots, the traffic channel slots comprising voice or data; and the MS may be further adapted to receive one or more further signals on further carriers, the one or more further carriers comprising traffic channel slots comprising voice or data, and the one or more further carriers may comprise slots of control channel data which do not provide synchronisation information.

### Method In accordance with the invention

The inventive concept explained above also encompasses an inventive method. The inventive method of transmitting signals in a cellular radio communications system, comprises:
(i) broadcasting at least one signal comprising control channel information on a carrier to subscribers within the cellular radio communications system;
(ii) dividing the said carrier into TDMA frames, each TDMA frame having a frame number N;
(iii) storing or generating at least two sets S0-S2 of pre-determined frequencies fᵢ;
(iv) selecting one of the said sets S0-S2 of pre-determined frequencies fᵢ in dependence on the frame number N of the TDMA frame being broadcast at any particular time;
(v) broadcasting the said carrier at the said time on a frequency taken from the selected one of the said sets S0-S2.

The method may further comprise choosing the selected one of the sets in dependence on both the frame number N of the TDMA frame and the number of the time slot TS being broadcast at the time. The broadcasting may be achieved using pre-determined frequencies from the selected set to broadcast the slots of the carrier in a frequency hopping sequence. The carrier may be transmitted in accordance with the EDGE compact or EDGE GSM protocol.

A first one S0 of the sets of frequencies may consist of only one pre-determined frequency f₀, the method further comprising not applying frequency hopping to the carrier signal when the first set S0 has been selected.

The base stations of at least two cells C1, C2 of the cellular radio communications system may broadcast the at least one carrier in synchronism, and the said at least one carrier may comprise control channel information for subscribers in the said at least two cells C1, C2.

The sets of frequencies S0-S2 may be selected so as to optimise multi-slot transmission. In particular, the method may employ a first set of frequencies S0 comprising only a first frequency, and a second set of frequencies S1 comprising at least two frequencies, one of the frequencies of the second set being the first frequency.

However, the method may employ a first set of frequencies S0 comprising only a first frequency; and a third set of frequencies S2 comprising one or more frequencies, the one or more frequencies of the third set not including the first frequency.

In a preferred embodiment however, the method employs a first set of frequencies S0 comprising only a first frequency, a second set of frequencies S1 comprising at least two frequencies, one of the frequencies of the second set being the first frequency, and a third set of frequencies S2 comprising one or more frequencies, the one or more frequencies of the third set not including the first frequency.

The first set of frequencies S0 may be selected when a frame containing control channel data that is used for initial synchronisation is being broadcast. More particularly, the first set of frequencies S0 may be selected when a time-slot containing control channel data that is used for initial synchronisation is being broadcast.

The carrier may comprise slots of control channel data, at least some of the control channel data providing synchronisation information, and traffic channel slots, the traffic channel slots comprising voice or data. In this case, one or more further signals may be broadcast on further carriers, the one or more further carriers comprising traffic channel slots comprising voice or data, and the one or more further carriers may comprise slots of control channel data which do not provide synchronisation information.

## Claims

1. A cellular radio communications system, wherein:
(i) at least one signal comprising control channel information is broadcast on a carrier to subscribers within the cellular radio communications system;
(ii) the said carrier is divided into TDMA frames, each TDMA frame having a frame number (N);
(iii) the system is adapted to store at least two sets (S0- S2) of pre-determined frequencies (fᵢ), the said carrier being broadcast at any particular time on a frequency taken from a selected one of the said sets (S0- S2) of pre-determined frequencies (fᵢ);
(iv) the system is adapted to chose the said selected one of the said sets of pre-determined frequencies (fᵢ) in dependence on the frame number (N) of the TDMA frame being broadcast at the said time.

2. The cellular radio communications system of claim 1, wherein
the system is further adapted to chose the selected one of the said sets in dependence on both the frame number (N) of the TDMA frame and the number of the time slot (TS) being broadcast at the said time.

3. The cellular radio communications system of claim 1 or claim 2, wherein
the system uses the pre-determined frequencies from the selected set to broadcast the carrier in a frequency hopping sequence.

4. The cellular radio communications system of any previous claim, wherein
a first one (S0) of the said sets of frequencies consists of only one pre-determined frequency (fo), whereby the cellular radio communications system does not apply frequency hopping to the carrier when the first set (S0) has been selected.

5. The cellular radio communications system of any previous claim, wherein:
the base stations of at least two cells (C1, C2) of the cellular radio communications system are synchronised together for broadcasting the said at least one carrier; and
the said at least one signal comprises control channel information for subscribers in the said at least two cells of the cellular radio communications system.

6. The cellular radio communications system of any previous claim, wherein the cells (C1, C2) are part of an EDGE compact or EDGE GSM cellular radio communications system.

7. The cellular radio communications system of any previous claim, wherein the sets of frequencies (S0- S2) are selected to optimise multi-slot operation of the system.

8. The cellular radio communications system of any of claims 1-7, wherein:
a first set of frequencies (S0) comprises only a first frequency; and
a second set of frequencies (S1) comprises at least two frequencies, one of the frequencies of the second set being the first frequency.

9. The cellular radio communications system of any of claims 1-7, wherein:
a first set of frequencies (S0) comprises only a first frequency; and
a third set of frequencies (S2) comprises one or more frequencies, the one or more frequencies of the third set not including the first frequency.

10. The cellular radio communications system of any of claims 1-7, wherein:
a first set of frequencies (S0) comprises only a first frequency;
a second set of frequencies (S1) comprises at least two frequencies, one of the frequencies of the second set being the first frequency; and
a third set of frequencies (S2) comprises one or more frequencies, the one or more frequencies of the third set not including the first frequency.

11. The cellular radio communications system of any of claims 8-10, wherein the system selects the first set of frequencies (S0) when a frame containing control channel data that is used for initial synchronisation is being broadcast.

12. The cellular radio communications system of claim 11, wherein
the system selects the first set of frequencies (S0) when a time-slot containing control channel data that is used for initial synchronisation is being broadcast.

13. The cellular radio communications system of any previous claim, wherein
the said carrier comprises slots of control channel data, at least some of the control channel data providing synchronisation information, and traffic channel slots, the traffic channel slots comprising voice or data; and
the system broadcasts one or more further signals on further carriers, the one or more further carriers comprising traffic channel slots comprising voice or data, and the one or more further carriers may comprise slots of control channel data which do not provide synchronisation information.

14. A cellular radio communications system substantially as hereinbefore described with reference to, or as illustrated by, any of figures 2-9 of the drawings.

15. A subscriber station for use in a cellular radio communications system, the subscriber station comprising:
(i) radio receiver means for receiving a signal broadcast on at least one carrier, the said signal comprising control channel information for subscribers within the cellular radio communications system, the said carrier being divided into TDMA frames, each TDMA frame having a frame number (N);
(ii) means storing at least two sets (S0- S2) of pre-determined frequencies (fᵢ); whereby,
(iii) the subscriber station is adapted to receive the carrier at any particular time on a frequency taken from a selected one of the said sets (S0- S2) of pre-determined frequencies (fᵢ); and
(iv) the subscriber station is adapted to chose the selected one of the said sets in dependence on the frame number (N) of the TDMA frame being received at the said time.

16. The subscriber station of claim 15, wherein
the subscriber station is further adapted to chose the selected one of the said sets (S0- S2) in dependence on both the frame number (N) of the TDMA frame and the number of the time slot (TS) within the TDMA frame being received at the said time.

17. The subscriber station of claim 15 or claim 16, wherein
the subscriber station uses the pre-determined frequencies from the selected set to receive slots of the carrier in a frequency hopping sequence.

18. The subscriber station of any of claims 15-17, wherein
a first one (S0) of the said sets of frequencies consists of only one pre-determined frequency (f₀), whereby the subscriber station does not apply frequency hopping in receiving slots of the carrier when the first set (S0) has been selected.

19. The subscriber station of any of claims 15-18, wherein:
the at least one signal comprises control channel information for the subscriber station.

20. The subscriber station of any of claims 15-19, wherein
the subscriber station is a mobile radio.

21. The subscriber station of claim 20, wherein
the subscriber station is an EDGE compact- or EDGE classic GSM mobile radio.

22. The subscriber station of any of claims 15-21, wherein:
a first set of frequencies (S0) comprises only a first frequency; and
a second set of frequencies (S1) comprises at least two frequencies, one of the frequencies of the second set being the first frequency.

23. The subscriber station of any of claims 15-21, wherein:
a first set of frequencies (S0) comprises only a first frequency;
a second set of frequencies (S1) comprises at least two frequencies, one of the frequencies of the second set being the first frequency; and
a third set of frequencies (S2) compnses one or more frequencies, the one or more frequencies of the third set not including the first frequency.

24. The subscriber station of claim 22 or claim 23, wherein
the subscriber station selects the first set of frequencies (S0) when a frame containing control channel data that is used for initial synchronisation is being broadcast.

25. The subscriber station of claim 24, wherein
the subscriber station selects the first set of frequencies (S0) when a time-slot containing control channel data that is used for initial synchronisation is being broadcast.

26. The subscriber station of any of claims 15-25, wherein:
the said carrier comprises slots of control channel data, at least some of the control channel data providing synchronisation information, and traffic channel slots, the traffic channel slots comprising voice or data; and
the subscriber station is adapted to receive one or more further signals on further carriers, the one or more further carriers comprising traffic channel slots comprising voice or data, and the one or more further carriers may comprise slots of control channel data which do not provide synchronisation information.

27. A subscriber station substantially as hereinbefore described with reference to, or as illustrated by, any of figures 10 and 11 of the drawings.

28. A method of transmitting signals in a cellular radio communications system, comprising:
(i) broadcasting at least one signal comprising control channel information on a carrier to subscribers within the cellular radio communications system;
(ii) dividing the said carrier into TDMA frames, each TDMA frame having a frame number (N);
(iii) storing or generating at least two sets (S0- S2) of pre-determined frequencies (fᵢ);
(iv) selecting one of the said sets (S0-S2) of pre-determined frequencies (fᵢ) in dependence on the frame number (N) of the TDMA frame being broadcast at any particular time;
(v) broadcasting the said carrier at the said time on a frequency taken from the selected one of the said sets (S0- S2).

29. The method of claim 28, further comprising
choosing the selected one of the said sets in dependence on both the frame number (N) of the TDMA frame and the number of the time slot (TS) being broadcast at the said time.

30. The method of claim 28 or claim 29, further comprising
using the pre-determined frequencies from the selected set to broadcast the slots of the carrier in a frequency hopping sequence.

31. The method of any of claims 28-30, wherein a first one (S0) of the said sets of frequencies consists of only one pre-determined frequency (fo), the method further comprising not applying frequency hopping to the carrier signal when the first set (S0) has been selected.

32. The method of any of claims 28-31, further comprising
the base stations of at least two cells (C1, C2) of the cellular radio communications system broadcasting the said at least one carrier in synchronism; and
the said at least one carrier comprising control channel information for subscribers in the said at least two cells (C1, C2).

33. The method of any of claims 28-32, further comprising transmitting the carrier in accordance with the EDGE compact or EDGE GSM protocol.

34. The method of any of claims 28-33, further comprising selecting the sets of frequencies (S0- S2) so as to optimise multi-slot transmission.

35. The method of any of claims 28-34, wherein:
a first set of frequencies (S0) comprises only a first frequency; and
a second set of frequencies (S1) comprises at least two frequencies, one of the frequencies of the second set being the first frequency.

36. The method of any of claims 28-34, wherein:
a first set of frequencies (S0) comprises only a first frequency; and
a third set of frequencies (S2) comprises one or more frequencies, the one or more frequencies of the third set not including the first frequency.

37. The method of any of claims 28-34, wherein:
a first set of frequencies (S0) comprises only a first frequency;
a second set of frequencies (S1) comprises at least two frequencies, one of the frequencies of the second set being the first frequency; and
a third set of frequencies (S2) comprises one or more frequencies, the one or more frequencies of the third set not including the first frequency.

38. The subscriber station of claims 35-37, wherein
the first set of frequencies (S0) is selected when a frame containing control channel data that is used for initial synchronisation is being broadcast.

39. The subscriber station of claim 38, wherein
the first set of frequencies (S0) is selected when a time-slot containing control channel data that is used for initial synchronisation is being broadcast.

40. The method of any of claims 28-39, wherein the said carrier comprises slots of control channel data, at least some of the control channel data providing synchronisation information, and traffic channel slots, the traffic channel slots comprising voice or data; and
the method further comprising broadcasting one or more further signals on further carriers, the one or more further carriers comprising traffic channel slots comprising voice or data, and the one or more further carriers may comprise slots of control channel data which do not provide synchronisation information.
